# FASCICULE DE BREVET EUROPEEN

(11) **EP 4 639 078 B1**
(45) Date de publication et mention de la délivrance du brevet: **11.11.2026**
(21) Numéro de dépôt: 23833820.6
(22) Date de dépôt: 19.12.2023
(51) Int. Cl.: G01B 11/27

(54) **PROCÉDÉ DE DÉTERMINATION DE LA VARIATION D'ASSIETTE DES VÉHICULES AUTOMOBILES**
VERFAHREN ZUR BESTIMMUNG DER LAGEÄNDERUNG VON KRAFTFAHRZEUGEN
METHOD FOR DETERMINING THE ATTITUDE VARIATION OF MOTOR VEHICLES

(30) Priorité: 22.12.2022 FR 2214264
(43) Date de publication de la demande: 29.10.2025
(73) Titulaire: RENAULT s.a.s., 92100 Boulogne-Billancourt (FR)
(72) Inventeur: BEDU, François, 78280 GUYANCOURT (FR); VIGNERON, Paul, 78280 GUYANCOURT (FR)
(74) Mandataire: Renault Group
(86) Numéro de dépôt international: PCT/EP2023/086755
(87) Numéro de publication internationale: WO 2024/133342

(56) Documents cités:
- DE-A1- 102008 025 948
- FR-A1- 3 066 267
- US-A1- 2010 165 102

## Description

La présente invention se rapporte à un procédé de détermination de la variation d'assiette des véhicules automobiles.

L'assiette d'un véhicule automobile est globalement l'orientation de son châssis par rapport à la paroi de sol lorsque ses quatre roues sont en appui sur la paroi. L'assiette est dite plongeante lorsque la partie avant du châssis est rapprochée de la paroi de sol, tandis que la partie arrière en est écartée, et elle est dite cabrée, lorsqu'à l'inverse la partie avant du châssis est écartée de la paroi de sol, tandis que la partie arrière en est rapprochée.

Suivant l'état de charge du véhicule, l'assiette en est plus ou moins modifiée. Chaque véhicule dispose de sa propre loi de variation d'assiette en lien notamment avec la masse, l'empattement du véhicule, du type d'essieu et de la raideur des suspensions.

Plusieurs éléments et dispositifs du véhicule sont affectés par l'assiette, et notamment, le faisceau d'éclairage avant, la pression des pneus ou encore les suspensions pilotées du type oléopneumatique.

US 2010/165102 A1 décrit un procédé et dispositif de détermination de la modification de l'angle de tangage d'une caméra d'un véhicule. DE 10 2008 025948 A1 décrit un procédé permettant de détecter une variation de l'angle de tangage d'un véhicule à partir de la position déterminée d'un objet, cette variation étant provoquée par le mouvement du véhicule.

Il est connu de mettre en œuvre des capteurs sous le châssis, à l'avant et à l'arrière par exemple, pour pouvoir mesurer sa hauteur par rapport à la paroi de sol et ainsi obtenir une mesure de l'assiette.

On pourra se référer notamment au document FR 3 066 267 A1, lequel décrit un tel procédé d'estimation d'assiette.

La mise en place de tels capteurs nécessite des études d'implantation complexes et de plus, les capteurs requièrent un câblage pour pouvoir être alimentés et en retour, pour récupérer les signaux qu'ils génèrent.

Au surplus, les capteurs sont mis à l'épreuve des gravillons et des projections d'eau ce qui nécessite qu'ils soient relativement résistants et soient protégés par des protections adaptées. Aussi, un problème qui se pose et que vise à résoudre la présente invention est de fournir un procédé plus économique permettant de déterminer l'assiette du véhicule automobile.

Dans le but de résoudre ce problème, et selon un premier objet, il est proposé un procédé de détermination de la variation d'assiette d'un véhicule automobile s'étendant selon une direction longitudinale, ledit véhicule automobile comprenant un dispositif d'enregistrement adapté à fournir des signaux représentatifs de la scène se déroulant à l'avant dudit véhicule automobile et un dispositif de projection d'un signal lumineux vers l'avant dudit véhicule automobile, ledit dispositif d'enregistrement et ledit dispositif de projection étant orientés respectivement selon des angles prédéfinis par rapport à ladite direction longitudinale dudit véhicule automobile. Le procédé comprend les étapes suivantes : a) on installe ledit véhicule automobile sur une paroi de sol horizontale à une distance donnée d'une paroi verticale, et on projette ledit signal lumineux contre ladite paroi de manière à définir un repère sur ladite paroi verticale ; b) on enregistre des signaux représentatif d'une image de la représentation dudit repère sur ladite paroi verticale ; c) on détermine la distance de la représentation dudit repère par rapport aux bords horizontaux de ladite image de manière à pouvoir déterminer la position verticale dudit repère par rapport à ladite paroi de sol ; et, d) on compare ladite position verticale dudit repère à une position verticale de référence dudit repère pour pouvoir déterminer la variation d'assiette.

Ainsi, une caractéristique de l'invention réside dans la mise en œuvre des moyens usuels installés en série sur les véhicules automobiles pour apprécier l'assiette sans nécessairement faire appel à des capteurs de hauteur spécifiques. En conséquence, le procédé selon l'invention est peu coûteux et requiert la mise en œuvre d'un programme d'ordinateur adapté. Le dispositif de projection du signal lumineux est maintenu en position fixe par rapport au véhicule et par rapport à son châssis. Aussi, il projette un signal vers l'avant du véhicule selon un angle prédéterminé par rapport au châssis qui ne varie pas durant la vie du véhicule. Partant, lorsqu'on approche le véhicule en regard d'une paroi verticale, à une distance prédéterminée, la projection du signal lumineux sur la paroi verticale constitue un repère révélateur de l'assiette. Et la distance du repère par rapport à la paroi de sol peut être mesurée grâce au procédé selon invention.

En conséquence, lorsque l'assiette du véhicule est modifiée, l'orientation du signal lumineux l'est également, et parallèlement, la distance du repère par rapport à la paroi de sol. Ainsi, l'assiette des véhicules automobiles est prédéfinie par les caractéristiques structurelles des véhicules et elle correspond à une position d'équilibre de la projection du signal lumineux sur la paroi verticale. Si par exemple un véhicule présente une assiette plongeante, le repère se situera en dessous du repère d'équilibre. À l'inverse si le véhicule présent une assiette cabrée, le repère se situera en dessus du repère d'équilibre.

Selon un mode de mise en œuvre de l'invention particulièrement avantageux, on met en œuvre les feux de croisement dudit véhicule automobile comme signal lumineux. En effet, les feux de croisement demeurent en position fixe sur la caisse du véhicule automobile et par conséquent, par rapport au châssis. Au surplus, lorsqu'ils sont projetés sur une paroi verticale à courte distance, ils offrent une délimitation nette entre une zone éclairée inférieure et une zone sombre supérieure. Et cette délimitation constitue alors un repère aisément identifiable. D'autres dispositifs peuvent être mis en œuvre pour produire un signal lumineux orienté. Par exemple, on peut installer à l'intérieur des blocs d'éclairage des véhicules, une diode laser permettant d'obtenir un faisceau orienté et adapté à former un repère sur une paroi verticale. Selon un mode de réalisation de l'invention préféré, ledit dispositif d'enregistrement est une caméra numérique. En effet, les caméras numériques sont installées usuellement sur les véhicules automobiles. Elles le sont depuis longue date sur la paroi arrière de coffre pour guider le conducteur dans les phases de recul du véhicule. Elles le sont désormais en série sur les parois avant pour l'aide à la conduite. Partant, la mise en œuvre du procédé selon l'invention n'engendre pas de surcoût matériel.

Par ailleurs, ledit véhicule automobile étant muni à l'avant d'un capteur ultrasonore, préférentiellement, on mesure la distance qui s'étend entre ledit véhicule et ladite paroi verticale avec ledit capteur ultrasonore pour pouvoir installer ledit véhicule automobile à ladite distance donnée.

On observera que la mesure automatique de la position du repère sur la paroi verticale requiert la connaissance de la position spatiale du dispositif d'enregistrement. Or, la hauteur de ce dernier par rapport à la paroi de sol est connue, et sa distance selon une direction horizontale par rapport à la paroi verticale est également déterminée, puisque le véhicule est avancé à la distance donnée grâce à la mesure du capteur ultrasonore.

Préférentiellement, ledit dispositif d'enregistrement est installé à l'avant du pavillon dudit véhicule automobile. Par conséquent, l'angle de vision du dispositif est dégagé, et vient tangenter l'avant du véhicule pour pouvoir enregistrer la scène sur la paroi verticale. D'autres dispositifs peuvent être mis en œuvre pour produire un signal lumineux orienté. Par exemple, on peut installer à l'intérieur des blocs d'éclairage des véhicules, une diode laser permettant d'obtenir un faisceau orienté et adapté à former un repère sur une paroi verticale. Avantageusement, ledit dispositif d'enregistrement est orienté selon une direction sensiblement inclinée vers ladite paroi de sol. De la sorte, on peut venir rapprocher le véhicule automobile à une distance relativement faible de la paroi verticale, par exemple inférieure à 2 m. De la sorte, on obtient une meilleure précision de la mesure du repère et partant, de l'assiette.

Selon l'invention et avantageusement, on détermine les distances qui s'étendent, horizontalement entre ledit dispositif d'enregistrement et ladite paroi verticale et verticalement entre ledit dispositif d'enregistrement et ladite paroi de sol ; ensuite on enregistre, l'angle de vision vertical et l'angle d'orientation par rapport à l'horizontale dudit dispositif d'enregistrement; puis, on fait le produit de l'angle de vision vertical dudit dispositif d'enregistrement et de la distance de la représentation dudit repère par rapport aux bords horizontaux de ladite image, et on soustrait au produit le demi-angle de vision, tandis qu'on lui additionne ledit angle d'orientation pour obtenir un angle α ; ensuite on calcule la tangente dudit angle α et on fait le produit du résultat avec ladite distance qui s'étend horizontalement entre ledit dispositif d'enregistrement et ladite paroi verticale ; et finalement, on fait la différence du produit avec la distance entre ledit dispositif d'enregistrement et ladite paroi de sol pour pouvoir obtenir la position verticale dudit repère par rapport à ladite paroi de sol.

Autrement dit, grâce à un calcul trigonométrique que l'on décrira plus en détail dans la suite de la description, on obtient aisément une mesure de l'assiette du véhicule. Cette mesure peut être comparée, soit aux mesures précédentes ou bien à une mesure normalisée fournie par le constructeur.

Selon un autre objet, il est proposé un véhicule automobile comprenant une installation de détermination de la variation d'assiette, ledit véhicule automobile s'étendant selon une direction longitudinale et comprenant d'une part un dispositif d'enregistrement adapté à fournir des signaux représentatifs de la scène se déroulant à l'avant dudit véhicule automobile et d'autre part un dispositif de projection d'un signal lumineux vers l'avant dudit véhicule automobile, ledit dispositif d'enregistrement et ledit dispositif de projection étant orientés respectivement selon des angles prédéfinis par rapport à ladite direction longitudinale dudit véhicule automobile. Le véhicule automobile comprend : a) des moyens d'enregistrement pour enregistrer des signaux représentatif d'une image de la représentation d'un repère sur une paroi verticale, lorsque ledit véhicule automobile est installé sur une paroi de sol horizontale à une distance donnée de ladite paroi verticale, et que ledit signal lumineux est projeté contre ladite paroi de manière à définir ledit repère sur ladite paroi verticale ; b) des moyens de calcul pour déterminer la distance de la représentation dudit repère par rapport aux bords horizontaux de ladite image de manière à pouvoir déterminer la position verticale dudit repère par rapport à ladite paroi de sol ; et, c) des moyens de comparaison pour comparer ladite position verticale dudit repère à une position verticale de référence dudit repère pour pouvoir déterminer la variation d'assiette.

Autrement dit, véhicule automobile comprend tous les moyens permettant de mettre en œuvre le procédé selon l'invention et il en présente les avantages y relatifs.

Aussi, il comprend avantageusement un ordinateur de bord comportant lesdits moyens d'enregistrement, lesdits moyens de calcul et lesdits moyens de comparaison.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique de côté de mise en œuvre d'un véhicule automobile conforme à l'invention ;
[Fig. 2] est une vue schématique de face d'une image permettant de mettre en œuvre le procédé selon l'invention ; et,

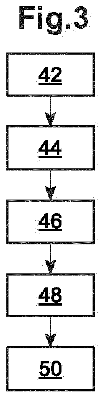

[Fig. 3] est un organigramme des étapes du procédé conforme à l'invention.

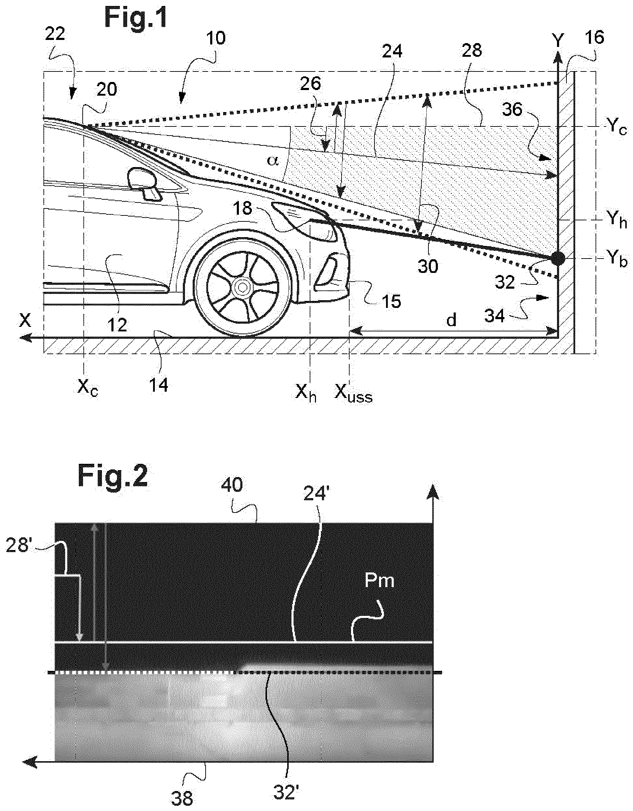

La [Fig. 1] montre de côté, l'avant 10 d'un véhicule automobile 12. Le véhicule automobile 12 est en appui sur une paroi de sol horizontale 14. L'avant 10 du véhicule automobile 12 s'étend en regard d'une paroi verticale 16 à une distance de 1,5 m en l'espèce. Une telle distance peut être mesurée aisément au moyen d'un détecteur ultrasonore installé à l'arrière du bouclier avant 15 du véhicule 12.

La paroi verticale 16 et la paroi de sol 14 définissent ensemble un repère orthogonal (X, Y). Le véhicule automobile 12 comporte des feux de croisement 18 situés à l'avant 10 et aptes à éclairer la paroi verticale 16 comme on l'expliquera ci-après. La distance des feux de croisement 18 par rapport à la paroi verticale 16 est alors parfaitement définie.

Le véhicule automobile 12 comprend également une caméra numérique 20 installée à l'avant du pavillon 22.

La caméra numérique 20 présente un axe optique 24 sensiblement incliné vers la paroi de sol 14, et formant un premier angle 26 avec un plan horizontal 28. Autrement dit, l'axe optique 24 de la caméra numérique 20 appartient au plan médian de la résolution verticale de la caméra. Plus précisément, au-dessus du plan médian, il y a autant de pixels selon la direction verticale, qu'en dessous comme on l'expliquera ci-dessous.

De plus, on observera que l'inclinaison de la caméra numérique 20 est définie par rapport au véhicule 12 lors de sa construction. Et cette inclinaison demeure durant la vie du véhicule. Aussi elle est déterminée par rapport au plan horizontal.

Par ailleurs, la caméra numérique présente un angle de vision vertical 30 venant tangenter l'extrême avant du véhicule automobile 12. Cet angle de vision est par exemple compris entre 35° et 45°. On observera que l'axe optique 24 correspond à la bissectrice de l'angle de vision vertical 30.

Ainsi, la caméra numérique 20 est adaptée à enregistrer des signaux représentatifs de la scène apparaissant sur la paroi verticale 16.

Aussi, les feux de croisement 18 lorsqu'ils sont mis en service éclairent directement la paroi verticale 16 et forment une ligne de démarcation 32 entre une zone inférieure éclairée 34 et une zone supérieure sombre 36.

La [Fig. 2] illustre ainsi l'image de la scène fournie par la caméra numérique 20. Elle s'étend verticalement entre un bord inférieur 38, et un bord supérieur 40. La caméra numérique 20 mise en œuvre ici, est définie par 1200 pixels selon une direction verticale.

La projection des éléments définis ci-dessus seront repérés sur l'image fournie par la caméra numérique 20 avec les mêmes référence affectées d'un signe prime : «'».

Ainsi, on y retrouve la représentation de la ligne de démarcation 32'. Elle est aisément identifiable et sa distance, par rapport aux bords supérieur 40 et inférieur 38 est aisément déterminée en nombre de pixels.

De plus, on retrouve la représentation de l'axe optique 24' et le plan médian Pm auquel il appartient.

On retrouve également la projection du plan horizontal 28' dont sa distance du plan médian Pm est prédéfinie par l'inclinaison de la caméra optique 20.

Ainsi, grâce à tous les éléments définis ci-dessus, on déterminera l'ordonnée Yb, telle que représentée sur la [Fig. 1], correspondant à la ligne de démarcation 32 apparaissant sur la paroi verticale 16. Cette ordonnée Yb correspond à une mesure de l'assiette du véhicule automobile qui pourra être comparée avec des mesures antérieures.

Aussi, le véhicule automobile 12 comprend un ordinateur de bord, non représenté. L'ordinateur de bord comporte des moyens d'enregistrement dans lesquels on enregistre, selon une première étape 42, les distances qui s'étendent horizontalement, entre ledit dispositif d'enregistrement 20 et ladite paroi verticale 16, Xc, et verticalement, entre la caméra numérique 20 et la paroi de sol 14, Yc. L'abscisse Xc et l'ordonnée Yc sont représentées sur les axes (X, Y) de la [Fig. 1]
Par construction, la distance qui sépare, selon une composante horizontale, la caméra numérique 20 du détecteur ultrasonore placé derrière le bouclier 15 est prédéfinie. Et la distance fournie par le détecteur ultrasonore y est ajoutée pour obtenir la valeur Xc. Quant à la valeur verticale Yc, elle est connue par construction.

Les moyens d'enregistrement permettent également d'enregistrer l'angle de vision vertical donné par la caméra numérique 20 et aussi, son orientation par rapport à la direction horizontale 28.

L'ordinateur de bord comporte en outre des moyens de calcul permettant de calculer l'angle α délimité sur la [Fig. 1], par le plan horizontal 28 coupant la caméra numérique 20 et le plan défini par la ligne de démarcation 32 et coupant également la caméra numérique 20.

Pour ce faire, les moyens de calcul font, dans une deuxième étape 44, le produit de l'angle de vision vertical de la caméra numérique 20 et du rapport de distance, calculé en nombre de pixels, entre la ligne de démarcation 32' et le bord supérieur 40 et le nombre total de pixels entre les deux bords opposés 38, 40. Dans une troisième étape 46, les moyens de calcul y ajoutent, l'angle d'orientation de la caméra numérique 20 et y soustraient, le demi-angle de vision, correspondant à l'inclinaison de la caméra 20.

Aussi, les moyens de calcul procèdent, dans une quatrième étape 48, au calcul de la tangente de cet angle α, et à la multiplication du résultat par la distance préenregistrée Xc qui s'étend horizontalement entre la caméra numérique 20 et la paroi verticale 16. On obtient de la sorte la distance qui s'étend, sur la paroi 16 représentée sur la [Fig. 1], entre la caméra numérique 20 et la paroi de sol 14, Yc, soustraite de la distance Yb, qui s'étend entre la ligne de démarcation 32 et la paroi de sol 14.

Partant, en soustrayant, dans une cinquième étape 50, cette distance ainsi calculée de la valeur Yc, on obtient la distance Yb recherchée.

Cette distance Yb correspond à une mesure de l'assiette du véhicule automobile 12 et peut être comparée à une précédente mesure afin de pouvoir en vérifier l'évolution.

## Revendications

1. Procédé de détermination de la variation d'assiette d'un véhicule automobile (12) s'étendant selon une direction longitudinale, ledit véhicule automobile comprenant un dispositif d'enregistrement (20) adapté à fournir des signaux représentatifs de la scène se déroulant à l'avant dudit véhicule automobile (12) et un dispositif de projection d'un signal lumineux (18) vers l'avant dudit véhicule automobile, ledit dispositif d'enregistrement (20) et ledit dispositif de projection (18) étant orientés respectivement selon des angles prédéfinis par rapport à ladite direction longitudinale dudit véhicule automobile ;
**caractérisé en ce qu'**il comprend les étapes suivantes :
- a) on installe ledit véhicule automobile (12) sur une paroi de sol horizontale (14) à une distance donnée d'une paroi verticale (16), et on projette ledit signal lumineux contre ladite paroi verticale (16) de manière à définir un repère sur ladite paroi verticale ;
- b) on enregistre des signaux représentatif d'une image de la représentation dudit repère sur ladite paroi verticale (16) ;
- c) on détermine la distance de la représentation dudit repère par rapport aux bords horizontaux (38, 40) de ladite image de manière à pouvoir déterminer la position verticale dudit repère par rapport à ladite paroi de sol (14) ; et,
- d) on compare ladite position verticale dudit repère à une position verticale de référence dudit repère pour pouvoir déterminer la variation d'assiette.

2. Procédé selon la revendication 1, **caractérisé en ce qu'**on met en œuvre les feux de croisement (18) dudit véhicule automobile comme signal lumineux.

3. Procédé selon la revendication 1 ou 2, **caractérisé en ce que** ledit dispositif d'enregistrement (20) est une caméra numérique.

4. Procédé selon l'une quelconque des revendications 1 à 3, **caractérisé en ce que**, ledit véhicule automobile (12) étant muni à l'avant d'un capteur ultrasonore, on mesure la distance qui s'étend entre ledit véhicule et ladite paroi verticale (16) avec ledit capteur ultrasonore pour pouvoir installer ledit véhicule automobile (12) à ladite distance donnée.

5. Procédé selon l'une quelconque des revendications 1 à 4, **caractérisé en ce que** ledit dispositif d'enregistrement (20) est installé à l'avant du pavillon (22) dudit véhicule automobile.

6. Procédé selon la revendication 5, **caractérisé en ce que** ledit dispositif d'enregistrement est orienté selon une direction sensiblement inclinée vers ladite paroi de sol (14).

7. Procédé selon l'une quelconque des revendications 1 à 5, **caractérisé en ce qu'**à ladite étape c) :
- on détermine les distances qui s'étendent, horizontalement entre ledit dispositif d'enregistrement (20) et ladite paroi verticale (16) et verticalement entre ledit dispositif d'enregistrement (20) et ladite paroi de sol (14) ;
- on enregistre, l'angle de vision vertical et l'angle d'orientation par rapport à l'horizontale dudit dispositif d'enregistrement ;
- on fait le produit de l'angle de vision vertical dudit dispositif d'enregistrement (20) et de la distance de la représentation dudit repère par rapport aux bords horizontaux (38, 40) de ladite image, et on soustrait au produit le demi-angle de vision, tandis qu'on lui additionne ledit angle d'orientation pour obtenir un angle α ;
- on calcule la tangente dudit angle α et on fait le produit du résultat avec ladite distance qui s'étend horizontalement entre ledit dispositif d'enregistrement (20) et ladite paroi verticale (16) ; et,
- on fait la différence du produit avec la distance entre ledit dispositif d'enregistrement (20) et ladite paroi de sol (14) pour pouvoir obtenir la position verticale dudit repère par rapport à ladite paroi de sol (14).

8. Véhicule automobile (12) comprenant une installation de détermination de la variation d'assiette, ledit véhicule automobile s'étendant selon une direction longitudinale et comprenant d'une part un dispositif d'enregistrement (20) adapté à fournir des signaux représentatifs de la scène se déroulant à l'avant dudit véhicule automobile et d'autre part un dispositif de projection d'un signal lumineux (18) vers l'avant dudit véhicule automobile, ledit dispositif d'enregistrement et ledit dispositif de projection étant orientés respectivement selon des angles prédéfinis par rapport à ladite direction longitudinale dudit véhicule automobile ;
**caractérisé en ce qu'**il comprend :
a) des moyens d'enregistrement (20) pour enregistrer des signaux représentatif d'une image de la représentation d'un repère sur une paroi verticale (16), lorsque ledit véhicule automobile (12) est installé sur une paroi de sol (14) horizontale à une distance donnée de ladite paroi verticale (16), et que ledit signal lumineux est projeté contre ladite paroi de manière à définir ledit repère sur ladite paroi verticale ;
- b) des moyens de calcul pour déterminer la distance de la représentation dudit repère par rapport aux bords horizontaux (38, 40) de ladite image de manière à pouvoir déterminer la position verticale dudit repère par rapport à ladite paroi de sol (14) ; et,
- c) des moyens de comparaison pour comparer ladite position verticale dudit repère à une position verticale de référence dudit repère pour pouvoir déterminer la variation d'assiette.

9. Véhicule automobile selon la revendication 8, **caractérisé en ce qu'**il comprend un ordinateur de bord comportant lesdits moyens d'enregistrement, lesdits moyens de calcul et lesdits moyens de comparaison.

## Patentansprüche

1. Verfahren zur Bestimmung der Nicklagenänderung eines Kraftfahrzeugs (12), das sich entlang einer Längsrichtung erstreckt, wobei das Kraftfahrzeug eine Aufzeichnungseinrichtung (20) zum Bereitstellen von Signalen, die für die vor dem Kraftfahrzeug stattfindende Szene repräsentativ sind, sowie eine Einrichtung (18) zum Projizieren eines Lichtsignals nach vorne aufweist, wobei die Aufzeichnungseinrichtung (20) und die Projektionseinrichtung (18) jeweils in vordefinierten Winkeln zur Längsrichtung des Kraftfahrzeugs ausgerichtet sind,
**dadurch gekennzeichnet, dass** das Verfahren folgende Schritte umfasst:
a) Aufstellen des Kraftfahrzeugs (12) auf einer horizontalen Bodenfläche (14) in einem vorgegebenen Abstand zu einer vertikalen Wand (16) und Projizieren des Lichtsignals auf die vertikale Wand (16), um eine Referenzmarke auf der vertikalen Wand zu erzeugen;
b) Erfassen von Signalen, die ein Bild der Darstellung der Referenzmarke auf der vertikalen Wand (16) repräsentieren;
c) Bestimmen des Abstands der Darstellung der Referenzmarke zu den horizontalen Bildrändern (38, 40), um die vertikale Position der Referenzmarke relativ zur Bodenfläche (14) zu bestimmen; und
d) Vergleichen der vertikalen Position der Referenzmarke mit einer Referenzposition der Referenzmarke zur Bestimmung der Nicklagenänderung.

2. Verfahren nach Anspruch 1, **dadurch gekennzeichnet, dass** die Abblendscheinwerfer (18) des Kraftfahrzeugs als Lichtsignal verwendet werden.

3. Verfahren nach Anspruch 1 oder 2, **dadurch gekennzeichnet, dass** die Aufzeichnungseinrichtung (20) eine Digitalkamera ist.

4. Verfahren nach einem der Ansprüche 1 bis 3, **dadurch gekennzeichnet, dass** bei einem mit einem Ultraschallsensor ausgestatteten Kraftfahrzeug (12) der Abstand zwischen dem Fahrzeug und der vertikalen Wand (16) mittels des Ultraschallsensors gemessen wird, um das Fahrzeug in dem vorgegebenen Abstand zu positionieren.

5. Verfahren nach einem der Ansprüche 1 bis 4, **dadurch gekennzeichnet, dass** die Aufzeichnungseinrichtung (20) im vorderen Bereich des Fahrzeugdachs (22) angeordnet ist.

6. Verfahren nach Anspruch 5, **dadurch gekennzeichnet, dass** die Aufzeichnungseinrichtung in einer Richtung ausgerichtet ist, die im Wesentlichen zur Bodenfläche (14) hin geneigt ist.

7. Verfahren nach einem der Ansprüche 1 bis 5, **dadurch gekennzeichnet, dass** in Schritt c):
• die horizontale Entfernung zwischen der Aufzeichnungseinrichtung (20) und der vertikalen Wand (16) sowie die vertikale Entfernung zwischen der Aufzeichnungseinrichtung (20) und der Bodenfläche (14) bestimmt werden;
• der vertikale Sichtwinkel und der Neigungswinkel der Aufzeichnungseinrichtung gegenüber der Horizontalen erfasst werden;
• das Produkt aus dem vertikalen Sichtwinkel und dem Abstand der Darstellung der Referenzmarke zu den horizontalen Bildrändern (38, 40) gebildet wird, von dem der halbe Sichtwinkel subtrahiert und der Neigungswinkel addiert wird, um einen Winkel alpha zu erhalten;
• die Tangensfunktion des Winkels alpha berechnet und mit der horizontalen Entfernung zwischen der Aufzeichnungseinrichtung (20) und der vertikalen Wand (16) multipliziert wird; und
• von dem erhaltenen Produkt die Entfernung zwischen der Aufzeichnungseinrichtung (20) und der Bodenfläche (14) subtrahiert wird, um die vertikale Position der Referenzmarke relativ zur Bodenfläche (14) zu bestimmen.

8. Kraftfahrzeug (12) mit einer Einrichtung zur Bestimmung einer Nicklagenänderung, wobei das Kraftfahrzeug sich entlang einer Längsrichtung erstreckt und einerseits eine Aufzeichnungseinrichtung (20) zum Bereitstellen von Signalen, die für die vor dem Fahrzeug stattfindende Szene repräsentativ sind, und andererseits eine Einrichtung (18) zum Projizieren eines Lichtsignals nach vorne aufweist, wobei die Aufzeichnungseinrichtung und die Projektionseinrichtung jeweils in vordefinierten Winkeln zur Längsrichtung des Kraftfahrzeugs ausgerichtet sind,
**dadurch gekennzeichnet, dass** es umfasst:
a) Aufzeichnungsmittel (20) zum Erfassen von Signalen, die ein Bild der Darstellung einer Referenzmarke auf einer vertikalen Wand (16) repräsentieren, wenn das Kraftfahrzeug (12) auf einer horizontalen Bodenfläche (14) in einem vorgegebenen Abstand von der vertikalen Wand angeordnet ist und das Lichtsignal auf die Wand projiziert wird;
b) Berechnungsmittel zum Bestimmen des Abstands der Darstellung der Referenzmarke zu den horizontalen Bildrändern (38, 40), um die vertikale Position der Referenzmarke relativ zur Bodenfläche (14) zu bestimmen; und
c) Vergleichsmittel zum Vergleichen der vertikalen Position der Referenzmarke mit einer Referenzposition der Referenzmarke zur Bestimmung der Nicklagenänderung.

9. Kraftfahrzeug nach Anspruch 8, **dadurch gekennzeichnet, dass** es einen Bordcomputer umfasst, der die Aufzeichnungsmittel, die Berechnungsmittel und die Vergleichsmittel enthält.

## Claims

1. A method for determining the variation in the trim of a motor vehicle (12) extending along a longitudinal direction, said motor vehicle comprising a recording device (20) adapted to provide signals representative of the scene in front of said motor vehicle (12) and a device (18) for projecting a light signal forward of said motor vehicle, said recording device (20) and said projection device (18) being oriented respectively at predefined angles with respect to said longitudinal direction of the motor vehicle,
**characterized in that** it comprises the following steps:
a) installing said motor vehicle (12) on a horizontal ground surface (14) at a given distance from a vertical wall (16), and projecting said light signal onto said vertical wall (16) so as to define a reference mark on said vertical wall;
b) recording signals representative of an image of the representation of said reference mark on said vertical wall (16);
c) determining the distance of the representation of said reference mark relative to the horizontal edges (38, 40) of said image so as to determine the vertical position of said reference mark relative to said ground surface (14); and
d) comparing said vertical position of said reference mark with a reference vertical position of said reference mark in order to determine the variation in trim.

2. The method according to claim 1, **characterized in that** the dipped-beam headlights (18) of said motor vehicle are used as the light signal.

3. The method according to claim 1 or 2, **characterized in that** said recording device (20) is a digital camera.

4. The method according to any one of claims 1 to 3, **characterized in that**, said motor vehicle (12) being equipped at the front with an ultrasonic sensor, the distance extending between said vehicle and said vertical wall (16) is measured using said ultrasonic sensor in order to position said motor vehicle (12) at said given distance.

5. The method according to any one of claims 1 to 4, **characterized in that** said recording device (20) is installed at the front of the roof (22) of said motor vehicle.

6. The method according to claim 5, **characterized in that** said recording device is oriented in a direction substantially inclined toward said ground surface (14).

7. The method according to any one of claims 1 to 5, **characterized in that**, in said step c):
• the distances extending horizontally between said recording device (20) and said vertical wall (16), and vertically between said recording device (20) and said ground surface (14), are determined;
• the vertical field-of-view angle and the orientation angle relative to the horizontal of said recording device are recorded;
• the product of the vertical field-of-view angle of said recording device (20) and the distance of the representation of said reference mark relative to the horizontal edges (38, 40) of said image is calculated, half of the field-of-view angle is subtracted therefrom and said orientation angle is added thereto in order to obtain an angle alpha;
• the tangent of said angle alpha is calculated and multiplied by said horizontal distance between said recording device (20) and said vertical wall (16); and
• the distance between said recording device (20) and said ground surface (14) is subtracted from said product in order to obtain the vertical position of said reference mark relative to said ground surface (14).

8. A motor vehicle (12) comprising an installation for determining a variation in trim, said motor vehicle extending along a longitudinal direction and comprising, on the one hand, a recording device (20) adapted to provide signals representative of the scene in front of said motor vehicle and, on the other hand, a device (18) for projecting a light signal forward of said motor vehicle, said recording device and said projection device being oriented respectively at predefined angles with respect to said longitudinal direction of the motor vehicle,
**characterized in that** it comprises:
a) recording means (20) for recording signals representative of an image of the representation of a reference mark on a vertical wall (16), when said motor vehicle (12) is positioned on a horizontal ground surface (14) at a given distance from said vertical wall (16), and said light signal is projected onto said wall so as to define said reference mark on said vertical wall;
b) calculating means for determining the distance of the representation of said reference mark relative to the horizontal edges (38, 40) of said image so as to determine the vertical position of said reference mark relative to said ground surface (14); and
c) comparison means for comparing said vertical position of said reference mark with a reference vertical position of said reference mark so as to determine the variation in trim.

9. The motor vehicle according to claim 8, **characterized in that** it comprises an onboard computer including said recording means, said calculating means and said comparison means.
